# EUROPEAN PATENT SPECIFICATION

(11) **EP 3 155 044 B1**
(45) Date of publication and mention of the grant of the patent: **10.01.2018**
(21) Application number: 15738997.4
(22) Date of filing: 11.06.2015
(51) Int. Cl.: C08L 7/00

(54) **RUBBER COMPOUND TO PRODUCE TYRES**
KAUTSCHUKMISCHUNG ZUR HERSTELLUNG VON REIFEN
COMPOSÉ DE CAOUTCHOUC POUR PRODUIRE DES PNEUS

(30) Priority: 11.06.2014 IT RM20140306
(43) Date of publication of application: 19.04.2017
(73) Proprietor: Bridgestone Corporation, Tokyo 104-8340 (JP)
(72) Inventor: COSSU, Giancarlo, I-00135 Roma (IT); RETTURA, Dennis, I-00128 Roma (IT); AGORETTI, Pasquale, I-00040 Ariccia (IT)
(74) Representative: Marchetti, Alessio
(86) International application number: PCT/IB2015/054433
(87) International publication number: WO 2015/189804

(56) References cited:
- EP-A1- 2 457 750
- WO-A1-2005/056659
- WO-A2-2010/049216
- KR-A- 20110 073 058

## Description

### TECHNICAL FIELD

The present invention concerns a rubber compound to produce tyres.

### BACKGROUND ART

Here and below by the expression "masterbatch mixing step" we mean a mixing step in which the polymer base is mixed with the other ingredients of the compound except for the vulcanization system.

Here and below by the expression "methylene donor chemical" we mean a chemical able to function as cross-linking agent by means of methylene bridges in the presence of a "methylene acceptor" chemical.

On the market there is an increasing demand for tyres with low rolling resistance. In said regard, part of the research in the field of tyres is concentrated on finding solutions able to provide a low rolling resistance, without compromising the other tyre characteristics, for example the mechanical characteristics.

One of the possibilities of obtaining improvements in terms of rolling resistance is to reduce the quantity of reinforcing filler in the compound. However, reduction of the reinforcing filler normally results in a deterioration of the mechanical characteristics of the compound, such as the tensile strength, for example.

The need was therefore felt to improve the rolling resistance characteristics of a compound by reducing its quantity of reinforcing filler, without this entailing a deterioration of the mechanical characteristics of the compound.

For a more complete understanding of the present invention, it should be highlighted that long-term thermal and mechanical stability of the component rubber compounds is a particularly important characteristic for tyres.

It is known that the use of peroxide-based vulcanization systems or the so-called Efficient Vulcanization (EV) systems, characterised by a sulphur/accelerator ratio in favour of the latter, guarantees greater long-term thermal and mechanical stability to the detriment of process flexibility and fatigue resistance. Differently, the Conventional Vulcanization (CV) systems, characterised by a sulphur/accelerator ratio to the disadvantage of the latter, guarantee greater flexibility at the production stage and a greater fatigue resistance, but to the detriment of the long-term thermal and mechanical stability.

The Applicant has surprisingly devised a solution which allows a reduction in the quantity of reinforcing filler in the compound without deteriorating the mechanical characteristics and, at the same time, an improvement in the long-term stability characteristics of the compound.

### DISCLOSURE OF INVENTION

The subject of the present invention is a rubber compound comprising at least one cross-linkable polymer base, a reinforcing filler and a vulcanization system; said compound being characterised in that it comprises a reinforcing resin and in that said vulcanization system comprises at least sulphur and an organic peroxide chemical.

Preferably, said reinforcing resin is a single-component resin added to the compound being prepared together with said vulcanization system.

Preferably, said reinforcing resin is a two-component resin, a methyl acceptor chemical of said two-component resin being added to the compound being prepared in a masterbatch mixing step and a methylene donor chemical being added to the compound being prepared together with said vulcanization system.

Preferably, the reinforcing filler is present in the compound in a quantity ranging from 5 to 30 phr.

A further subject of the present invention is a method for the preparation of a rubber compound for tyres comprising at least a masterbatch mixing stage, in which a cross-linkable polymer base is mixed with at least one reinforcing filler, and a subsequent mixing stage in which a vulcanization system is added to the compound being prepared; said method being characterised in that said vulcanization system comprises at least sulphur and an organic peroxide chemical and in that in said subsequent step of mixing with the compound being prepared, a single-component reinforcing filler or a methylene donor component of a two-component reinforcing resin is added; a methylene acceptor component of said two-component reinforcing resin being mixed with the polymer base in said masterbatch mixing step.

Preferably, said reinforcing resin is comprised in the group consisting of acrylic resins, alkyd resins, amine resins, amide resins, maleimide resins, maleic resins, epoxy resins, furan resins, phenolic resins, phenol formaldehyde resins, polyamide resins, polyester resins, urethane resins, vinyl resins, vinyl ester resins, cyanoacrylic resins, silicone resins, siloxane resins, melamine resins, urea-formaldehyde resins and fumaric resins.

Preferably, the organic peroxide chemical is comprised in the group consisting of 1,1-Di(tert-butylperoxy)-3,3,5-trimethylcyclohexane; 2,5-Dimethyl-2,5-di(tert-butylperoxy)hexane; 2,5-Dimethyl-2,5-di(tert-butylperoxy)hexyne; 3,3,5,7,7-Pentamethyl-1,2,4-trioxipane; Butyl 4,4-di(tert-butylperoxy)valerate; Di(2,4-dichlorobenzoyl) Di(4-methylbenzoyl) peroxide; Di(tert-butylperoxy-isopropyl)benzene; Dibenzoyl peroxide; Dicumyl peroxide; Di-tert-butyl peroxide; tert-Butylcumyl peroxide; tert-Butyl peroxy-3,5,5-trimethylhexanoate; tert-Butyl peroxybenzoate; tert-Butylperoxy 2-ethylhexyl carbonate.

Preferably, said organic peroxide chemical is present in the compound in a quantity ranging from 0.1 to 4 phr.
Preferably, said reinforcing filler is present in the compound in a quantity ranging from 1 to 50 phr.

A further subject of the present invention is a tyre portion produced with a compound subject of the present invention. Preferably, said portion is a tread.

Finally, a last subject of the present invention is a tyre comprising a portion produced with a compound subject of the present invention.

### BEST MODE FOR CARRYING OUT THE INVENTION

For a better understanding of the invention, embodiment examples are given below purely for illustrative non-limiting purposes.

### EXAMPLES

Five comparison compounds were produced (Compounds A - E) and a compound according to the present invention (Compound F).

The comparison compounds can be described as follows: Compound A is a standard compound without the organic peroxide chemical in the vulcanization system and without the reinforcing resin; Compound B comprises the organic peroxide chemical together with the sulphur in the vulcanization system, but does not comprise the reinforcing resin; Compound C differs from Compound A due to the fact that it has half the quantity of carbon black; Compound D also comprises half the quantity of carbon black with respect to Compound A, comprises the reinforcing resin but comprises sulphur only and not the organic peroxide chemical in the vulcanization system; Compound E also comprises half the quantity of carbon black with respect to Compound A, comprises the reinforcing resin but, unlike Compound D, comprises only the organic peroxide chemical and not sulphur in the vulcanization system.

The compound produced according to the principles of the present invention (Compound F) differs from the comparison compounds due to the fact that it has half the quantity of carbon black, and comprises the reinforcing resin with the simultaneous presence of the organic peroxide chemical and the sulphur in the vulcanization system.

The Compounds A - F were prepared according to the procedure described below.

### - preparation of the compounds -

### (1st mixing step)

Prior to the beginning of the mixing, the polymer base, the carbon black and the methylene acceptor chemical of the reinforcing resin were loaded in a mixer with tangential rotors and internal volume ranging from 230 to 270 litres, reaching a filling factor ranging from 66 to 72%.

The mixer was operated at a speed ranging from 40 to 60 r.p.m., and the mixture formed was discharged once a temperature ranging from 140 to 160°C had been reached.

### (2nd mixing step)

The mixture obtained from the preceding step was mixed again in the mixer operated at a speed ranging from 40 to 60 r.p.m. and, subsequently, discharged once a temperature ranging from 130 to 150°C had been reached.

### (3rd mixing step)

The vulcanization system consisting of sulphur, accelerators and/or the organic peroxide chemical and/or the methylene donor chemical was added to the mixture obtained from the preceding step, reaching a filling factor ranging from 63 to 67%.

The mixer was operated at a speed ranging from 20 to 40 r.p.m. and the mixture formed was discharged once a temperature ranging from 90 to 110°C had been reached.

If, unlike the example given above, the reinforcing resin were single-component, this would be added in the final mixing step together with the vulcanization system.

Table I shows in phr the compositions of the compounds.

**TABLE I**

| Compound | A | B | C | D | E | F |
|---|---|---|---|---|---|---|
| Natural rubber | 70.0 | 70.0 | 70.0 | 70.0 | 70.0 | 70.0 |
| Butyl rubber | 30.0 | 30.0 | 30.0 | 30.0 | 30.0 | 30.0 |
| Carbon black | 40.0 | 40.0 | 20.0 | 20.0 | 20.0 | 20.0 |
| Phenol formaldehyde | -- | -- | -- | 15.0 | 15.0 | 15.0 |
| HMMM | -- | -- | -- | 5.0 | 5.0 | 5.0 |
| Sulphur | 3.0 | 1.5 | 3.0 | 3.0 | -- | 1.5 |
| Dicumyl peroxide | - | 1.5 | -- | -- | 3.0 | 1.5 |
| Accelerator | 0.7 | 0.7 | 0.7 | 0.7 | 0.7 | 0.7 |

The carbon black used is N234.

The Phenol Formaldehyde and HMMM (hexamethoxymethylamine) are respectively the methylene acceptor chemical and the methlyene donor chemical of the two-component reinforcing resin.

The Dicumyl peroxide is the organic peroxide chemical.

The accelerator used is N-tert-butyl-2-benzothiazylsulfenamide (TBBS) .

### Experimental tests

The compounds, once vulcanized, underwent experimental tests to ascertain the advantages of the compound according to the present invention with respect to the comparison compounds.

In particular, the compounds underwent tests relative to the mechanical and dynamic properties. The mechanical properties were measured according to the ASTM D412C standard, while the dynamic properties were measured according to the ISO 4664 standard.

As is known to a person skilled in the art, the rolling resistance parameter is strictly correlated with the hysteresis values: the lower the hysteresis value, the better the rolling resistance.

For an evaluation of the long-term stability of the compounds, they underwent an "ageing" procedure during which periodical tests on the mechanical properties were performed. During the ageing procedure, the compounds were kept at a temperature of 100°C in compliance with the ISO 188 standard.

Table II shows the values of the experimental tests carried out. The hysteresis and toughness values were indexed to the values of the comparison compound A, while the stability values are expressed in percentage terms with respect to the datum recorded prior to the ageing (the higher the index, the better the property).

**TABLE II**

| Compound | A | B | C | D | E | F |
|---|---|---|---|---|---|---|
| Hysteresis | 100 | 100 | 130 | 120 | 120 | 130 |
| Toughness | 100 | 100 | 65 | 100 | 100 | 100 |
| Toughness after 6 days of ageing | 40 | 45 | 55 | 55 | 60 | 80 |

Table III shows the toughness values after 1, 3 and 6 days of ageing at 100°C in relation to the Compounds A and F. The values are expressed as a percentage with respect to the value of the compound prior to ageing.

**TABLE III**

| no. of days' ageing | 0 days | 1 day | 3 days | 6 days |
|---|---|---|---|---|
| Compound A | 100 | 62 | 50 | 40 |
| Compound F | 100 | 90 | 85 | 80 |

As can be seen from the data given in Tables II and III, the synergic effect due to the combination of a reinforcing resin and a vulcanization system comprising both sulphur and an organic peroxide chemical guarantees both an improvement in terms of rolling resistance, without compromising the mechanical properties, and, above all, an even more surprising improvement in terms of long-term stability of the mechanical properties.

The comparison Compounds B - D confirm that an only partial condition of the above-mentioned combination is not able to guarantee the advantages described above.

In particular, the effect of the above-mentioned synergy in the stability of the compounds is extremely surprising. In fact, the comparison compounds show that the sole combination of sulphur and organic peroxide chemical in the vulcanization system (Compound B), or the sole presence of the reinforcing resin with a vulcanization system with sulphur only (Compound D), or the sole presence of the reinforcing resin with a vulcanization system with the organic peroxide chemical only (Compound E) result in a much lower stability of the respective compounds than what is obtained with the combined presence of a reinforcing resin and a vulcanization system comprising both sulphur and an organic peroxide chemical.

To conclude, the combined presence of a reinforcing resin and a vulcanization system comprising both sulphur and an organic peroxide chemical allows the quantity of reinforcing filler to be reduced without compromising the mechanical characteristics and, surprisingly, guarantees high values in terms of long-term stability of the mechanical properties of the compound.

## Claims

1. A rubber compound comprising at least one cross-linkable polymer base, a reinforcing filler and a vulcanization system; said compound being **characterized by** comprising one reinforcing resin and in that said vulcanization system comprises at least sulphur and an organic peroxide chemical.

2. A rubber compound according to claim 1, **characterised in that** said reinforcing resin is a single-component resin added to the compound being prepared together with said vulcanization system.

3. A rubber compound according to claim 1, **characterised in that** said reinforcing resin is a two-component resin; a methyl acceptor chemical of said two-component resin being added to the compound being prepared during a masterbatch mixing step and a methylene donor chemical being added to the compound being prepared together with said vulcanization system.

4. A rubber compound according to one of the previous claims, **characterised in that** said reinforcing resin is comprised in the group consisting of acrylic resins, alkyd resins, amine resins, amide resins, maleimide resins, maleic resins, epoxy resins, furan resins, phenolic resins, phenol formaldehyde resins, polyamide resins, polyester resins, urethane resins, vinyl resins, vinyl ester resins, cyanoacrylic resins, silicone resins, siloxane resins, melamine resins, urea-formaldehyde resins, fumaric resins.

5. A rubber compound according to one of the previous claims, **characterised in that** said organic peroxide chemical is comprised in the group consisting of 1,1-Di(tert-butylperoxy)-3,3,5-trimethylcyclohexane; 2,5-Dimethyl-2,5-di(tert-butylperoxy)hexane; 2,5-Dimethyl-2,5-di(tert-butylperoxy)hexyne; 3,3,5,7,7-Pentamethyl-1,2,4-trioxipane; Butyl 4,4-di(tert-butylperoxy)valerate; Di(2,4-dichlorobenzoyl) Di(4-methyl benzoyl) peroxide; Di(tert-butylperoxy-isopropyl)benzene; Dibenzoyl peroxide; Dicumyl peroxide; Di-tert-butyl peroxide; tert-Butylcumyl peroxide; tert-butyl peroxy-3,5,5-trimethylhexanoate; tert-butyl peroxybenzoate; tert-butylperoxy 2-ethylhexyl carbonate.

6. A rubber compound according to one of the previous claims, **characterised in that** said organic peroxide chemical is present in the compound in a quantity ranging from 0.1 to 4 phr.

7. A rubber compound according to one of the previous claims, **characterised in that** said reinforcing resin is present in the compound in a quantity ranging from 1 to 50 phr.

8. A rubber compound according to one of the previous claims **characterized in that** said reinforcing filler is present in the compound in a quantity ranging from 5 to 30 phr.

9. A tyre portion manufactured with a compound according to one of the previous claims.

10. A tread manufactured with a compound according to one of the claims from 1 to 8.

11. A tyre comprising a portion according to claim 9.

## Patentansprüche

1. Gummimischung, umfassend mindestens eine vernetzbare Polymerbasis, einen verstärkenden Füllstoff und ein Vulkanisierungssystem; wobei die Mischung **gekennzeichnet ist durch** Umfassen eines verstärkenden Harzes und **dadurch, dass** das Vulkanisierungssystem mindestens Schwefel und eine organische Peroxidchemikalie umfasst.

2. Gummimischung nach Anspruch 1, **dadurch gekennzeichnet, dass** das verstärkende Harz ein Einkomponentenharz ist, das der Mischung in Zubereitung zusammen mit dem Vulkanisierungssystem zugegeben wird.

3. Gummimischung nach Anspruch 1, **dadurch gekennzeichnet, dass** das verstärkende Harz ein Zweikomponentenharz ist; wobei eine Methylakzeptorchemikalie des Zweikomponentenharzes in einem Masterbatch-Mischungsschritt zu der Mischung in Zubereitung hinzugegeben wird, und eine Methylendonorchemikalie zusammen mit dem Vulkanisierungssystem zu der Mischung in Zubereitung hinzugegeben wird.

4. Gummimischung nach einem der vorstehenden Ansprüche, **dadurch gekennzeichnet, dass** das verstärkende Harz umfasst ist in der Gruppe, bestehend aus Acrylharzen, Alkydharzen, Aminharzen, Amidharzen, Maleimidharzen, Maleinharzen, Epoxidharzen, Furanharzen, Phenolharzen, Phenol-Formaldehyd-Harzen, Polyamidharzen, Polyesterharzen, Urethanharzen, Vinylharzen, Vinylesterharzen, Cyanoacrylharzen, Silikonharzen, Siloxanharzen, Melaminharzen, Harnstoff-Formaldehyd-Harzen, Fumarharzen.

5. Gummimischung nach einem der vorstehenden Ansprüche, **dadurch gekennzeichnet, dass** die organische Peroxidchemikalie umfasst ist in der Gruppe, bestehend aus 1,1-Di(tert-butylperoxy)-3,3,5-trimethylcyclohexan; 2,5-Dimethyl-2,5-di(tert-butylperoxy)hexan; 2,5-Dimethyl-2,5-di(tert-butylperoxy)hexin; 3,3,5,7,7-Pentamethyl-1,2,4-trioxipan; Butyl-4,4-di(tert-butylperoxy)valerat; Di(2,4-dichlorbenzoyl) Di(4-methylbenzoyl)peroxid; Di(tert-butylperoxy-isopropyl)benzol; Dibenzoylperoxid; Dicumylperoxid; Di-tert-butylperoxid; tert-Butylcumylperoxid; tert-Butylperoxy-3,5,5-trimethylhexanoat; tert-Butylperoxybenzoat; tert-Butylperoxy-2-ethylhexylcarbonat.

6. Gummimischung nach einem der vorstehenden Ansprüche, **dadurch gekennzeichnet, dass** die organische Peroxidchemikalie in der Mischung in einer Menge im Bereich von 0,1 bis 4 phr vorliegt.

7. Gummimischung nach einem der vorstehenden Ansprüche, **dadurch gekennzeichnet, dass** das verstärkende Harz in der Mischung in einer Menge im Bereich von 1 bis 50 phr vorliegt.

8. Gummimischung nach einem der vorstehenden Ansprüche, **dadurch gekennzeichnet, dass** der verstärkende Füllstoff in der Mischung in einer Menge im Bereich von 5 bis 30 phr vorliegt.

9. Reifenabschnitt, gefertigt mit einer Mischung nach einem der vorstehenden Ansprüche.

10. Lauffläche, gefertigt mit einer Mischung nach einem der Ansprüche 1 bis 8.

11. Reifen, umfassend einen Abschnitt nach Anspruch 9.

## Revendications

1. Composé de caoutchouc comprenant au moins une base polymère réticulable, une charge renforçante et un système de vulcanisation ; ledit composé étant **caractérisé en ce qu'**il comprend une résine renforçante et **en ce que** ledit système de vulcanisation comprend au moins du soufre et une substance chimique peroxyde organique.

2. Composé de caoutchouc selon la revendication 1, **caractérisé en ce que** ladite résine renforçante est une résine à un seul composant, ajoutée au composé en cours de préparation conjointement avec ledit système de vulcanisation.

3. Composé de caoutchouc selon la revendication 1, **caractérisé en ce que** ladite résine renforçante est une résine à deux composants ; une substance chimique acceptrice de méthyle de ladite résine à deux composants étant ajoutée au composé en cours de préparation pendant une étape de mélange de mélange-maître et une substance chimique donneuse de méthylène étant ajoutée au composé en cours de préparation conjointement avec ledit système de vulcanisation.

4. Composé de caoutchouc selon l'une des revendications précédentes, **caractérisé en ce que** ladite résine renforçante est comprise dans le groupe constitué de résines acryliques, résines d'alkyde, résines d'amine, résines d'amide, résines de maléimide, résines maléiques, résines époxy, résines de furane, résines phénoliques, résines de phénol-formaldéhyde, résines de polyamide, résines de polyester, résines d'uréthane, résines vinyliques, résines d'ester de vinyle, résines cyano-acryliques, résines de silicone, résines de siloxane, résines de mélamine, résines d'urée-formaldéhyde, résines fumariques.

5. Composé de caoutchouc selon l'une des revendications précédentes, **caractérisé en ce que** ladite substance chimique peroxyde organique est comprise dans le groupe constitué de 1,1-di(tert-butylperoxy)-3,3,5-triméthylcyclohexane ; 2,5-diméthyl-2,5-di(tert-butylperoxy)hexane ; 2,5-diméthyl-2,5-di(tert-butylperoxy)hexyne ; 3,3,5,7,7-pentaméthyl-1,2,4-trioxipane ; butyl 4,4-di(tert-butylperoxy)valérate ; di(2,4-dichlorobenzoyl) di(4-méthyl-benzoyl) peroxyde ; di(tert-butylperoxy-isopropyl)benzène ; peroxyde de dibenzoyle ; peroxyde de dicumyle ; peroxyde de di-tert-butyle ; peroxyde de tert-butylcumyle ; peroxy-3,5,5-triméthylhexanoate de tert-butyle ; peroxybenzoate de tert-butyle ; carbonate de tert-butylperoxy 2-éthylhexyle.

6. Composé de caoutchouc selon l'une des revendications précédentes, **caractérisé en ce que** ladite substance chimique peroxyde organique est présente dans le composé en une quantité allant de 0,1 à 4 pcc.

7. Composé de caoutchouc selon l'une des revendications précédentes, **caractérisé en ce que** ladite résine renforçante est présente dans le composé en une quantité allant de 1 à 50 pcc.

8. Composé de caoutchouc selon l'une des revendications précédentes, **caractérisé en ce que** ladite charge renforçante est présente dans le composé en une quantité allant de 5 à 30 pcc.

9. Partie de pneumatique fabriquée avec un composé selon l'une des revendications précédentes.

10. Bande de roulement fabriquée avec un composé selon l'une des revendications 1 à 8.

11. Pneumatique comprenant une partie selon la revendication 9.
